# EUROPÄISCHE PATENTSCHRIFT

(11) **EP 3 267 702 B1**
(45) Veröffentlichungstag und Bekanntmachung des Hinweises auf die Patenterteilung: **19.12.2018**
(21) Anmeldenummer: 16178699.1
(22) Anmeldetag: 08.07.2016
(51) Int. Cl.: H04W 4/02, H04W 64/00, H04L 29/08

(54) **MOBILES KOMMUNIKATIONSGERÄT UND VERFAHREN ZUM BEWEGUNGSABHÄNGIGEN UPDATE DER POSITION**
MOBILE COMMUNICATION DEVICE AND METHOD FOR MOTION-DEPENDENT LOCATION UPDATE
DISPOSITIF MOBILE ET PROCÉDÉ POUR MISE À JOUR DE LA LOCATION BASÉE SUR LE MOUVEMENT

(43) Veröffentlichungstag der Anmeldung: 10.01.2018
(73) Patentinhaber: Deutsche Telekom AG, 53113 Bonn (DE)
(72) Erfinder: GLUDOVACZ, Dieter, 2521 Trumau (AT)
(74) Vertreter: Patentship Patentanwaltsgesellschaft mbH

(56) Entgegenhaltungen:
- WO-A1-2010/132583
- US-A1- 2011 159 884
- US-A1- 2013 295 967
- Jose Costa-Requena ET AL: "Software defined networks based 5G backhaul architecture", Proceedings of the 9th International Conference on Ubiquitous Information Management and Communication, IMCOM '15, 1 January 2015 (2015-01-01), pages 1-5, XP055385828, New York, New York, USA DOI: 10.1145/2701126.2701180 ISBN: 978-1-4503-3377-1

## Beschreibung

Die Erfindung betrifft ein mobiles Kommunikationsgerät sowie eine Verfahren zum Betreiben eines mobilen Kommunikationsgeräts, insbesondere in einem 5G-Kommunikationsnetzwerk.

Die fünfte Generation der mobilen Technologie (5G) betrifft die Anforderungen und technischen Herausforderungen der künftigen Kommunikationsnetze ab etwa dem Jahr 2020 und darüber hinaus. Damit wird eine vollständig mobile und vernetzte Gesellschaft angesprochen, die durch ein enormes Wachstum an Datenverkehr sowie gegenseitiger Vernetzung auf mehreren Ebenen charakterisiert ist.

In 5G werden neue Funkschnittstellen benötigt, um den Anforderungen an die Nutzung höherer Frequenzen gerecht zu werden, beispielsweise für neue Anwendungen wie Internet der Dinge (loT), spezielle Fähigkeiten wie z.B. geringerer Laufzeit, welche über das hinausgehen, was 4G Kommunikationsnetze leisten können. Dabei wird 5G als ein Ende-zu-Ende System betrachtet, das sämtliche Netzwerkaspekte beinhaltet, und zwar mit einem Design, das einen hohen Grad an Konvergenz ermöglicht. 5G wird die heutigen Zugangsmechanismen und deren mögliche Weiterentwicklungen vollständig nutzen, einschließlich der heutigen Festnetzzugangstechnologien sowie vieler anderer noch zu entwickelnder Zugangstechnologien.

5G wird in einer stark heterogenen Umgebung operieren, d.h. mit mehreren Typen von Zugangstechnologien, mehrschichtigen Netzwerken, vielfältigen Typen von Kommunikationsgeräten und Nutzerinteraktionen und dergleichen. Verschiedenste Anwendungen mit diametralen Anforderungen sollen optimal unterstützt werden, z.B. ausfallsichere, robuste Kommunikation, Kommunikation mit geringen Datenraten oder breitbandige Kommunikation in dicht besiedelten Bereichen. In solch einer Umgebung gibt es ein fundamentales Verlangen nach 5G, um ein nahtloses und konsistentes Nutzererlebnis über Zeit und Raum zu erfüllen. Für den Betreiber eines 5G-Kommunikationsnetzwerkes besteht die Notwendigkeit, die eingesetzten Ressourcen optimal und dynamisch an die jeweiligen Anforderungen anzupassen, um die Vielzahl an Anwendungen gleichzeitig unterstützen zu können.

Deshalb besteht in 5G zum einen ein Bedürfnis danach, die Leistungsfähigkeit der Kommunikation zu steigern, insbesondere einen höheren Datendurchsatz, eine geringere Verzögerung, eine besonders hohe Zuverlässigkeit, eine weitaus höhere Verbindungsdichte und einen größeren Mobilitätsbereich zu erreichen, und zum anderen aber auch die Flexibilität im Betrieb des Kommunikationsnetzwerkes zu erhöhen sowie maßgeschneiderte Funktionen mit dem geringstmöglichen Einsatz von Mitteln bereitzustellen. Diese erhöhte Leistungsfähigkeit wird zusammen mit der Fähigkeit zur Steuerung stark heterogener Umgebungen und der Fähigkeit zur Sicherung von Vertrauen, Identität und Privatsphäre der Nutzer erwartet.

Eine große Herausforderung zukünftiger Kommunikationsnetzwerke wird die Energieeffizienz sein, insbesondere im Lichte der stark wachsenden Anzahl von mobilen (und statischen) Kommunikationsgeräten. Bei einem Kommunikationsnetzwerk gemäß dem bekannten LTE-Standard (auch als 4G-Standard bezeichnet) besteht das folgende Problem hinsichtlich der Energieeffizienz.

Die Mobilitätsmanagemententität (MME) verwaltet einen jeweiligen Aufenthaltsort eines mobilen Kommunikationsgerätes in den Funkzellen. Dabei wird die Lokalisierung des mobilen Kommunikationsgeräts üblicherweise auf der Basis eines "Paging" durchgeführt, bei dem die MME das mobile Kommunikationsgerät regelmäßig nach einem Lokalisierungsupdate fragt und das mobile Kommunikationsgerät darauf mit dem Lokalisierungsupdate antwortet, was energetisch sehr ineffizient ist.

Aus Gründen der Energieeffizienz kann vorgesehen sein, dass ein mobiles Kommunikationsgerät, das sich im "Idle-Mode" befindet, seinen Aufenthaltsort nur bei einem Wechsel von einer "Tracking Area" zu einer anderen der MME mitteilt, d.h. wenn das mobile Kommunikationsgerät den Netzzugang verliert. Befindet sich das mobile Kommunikationsgerät nicht im "Idle-Mode", erfolgt das vorstehend beschriebene energieineffiziente permanente Tracking des mobilen Kommunikationsgeräts auf der Grundlage von Lokalisierungsupdates.

In WO 2010/132583 A1 ist ein dynamisches Benachrichtigungsschema für ortsbasierte Dienste offenbart. Dabei können verschiedene Benachrichtigungsbedingungen, welche zeitbasiert, abstandsbasiert, ereignisbasiert oder betriebsparameterbasiert sein können, verwendet werden.

In US 2013/0295967 A1 ist ein Ansatz zur Ortsbenachrichtigung ansprechend auf eine Veränderung eines Bewegungszustandes eines drahtlosen Mobilgerätes offenbart. Dabei können Veränderungen eines Bewegungsprofils berücksichtigt werden, wobei eine Analyse von Daten und Metriken eine Bestimmung einer Veränderung ermöglichen.

In US 2011/0159884 A1 ist ein System zur Bereitstellung von Ortsinformationen offenbart, wobei eine GPS-Komponente eines Mobilgerätes in einen Energiesparmodus versetzt werden kann, während das Mobilgerät als stationär betrachtet wird.

Der Artikel "Software Defined Networks based 5G Backhaul Architecture", Costa-Requena et al beschreibt eine Backhaul-Architektur für 5G Kommunikationsnetzwerke, die auf Software-definierten Netzwerken (SDN) basiert.

Es ist daher die Aufgabe der vorliegenden Erfindung, ein energieeffizienteres Konzept zur Lokalisierung eines mobilen Kommunikationsgeräts in einem Kommunikationsnetzwerk zu schaffen.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Geräte, Systeme und Verfahren können auf verschiedene Arten und Weisen implementiert sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

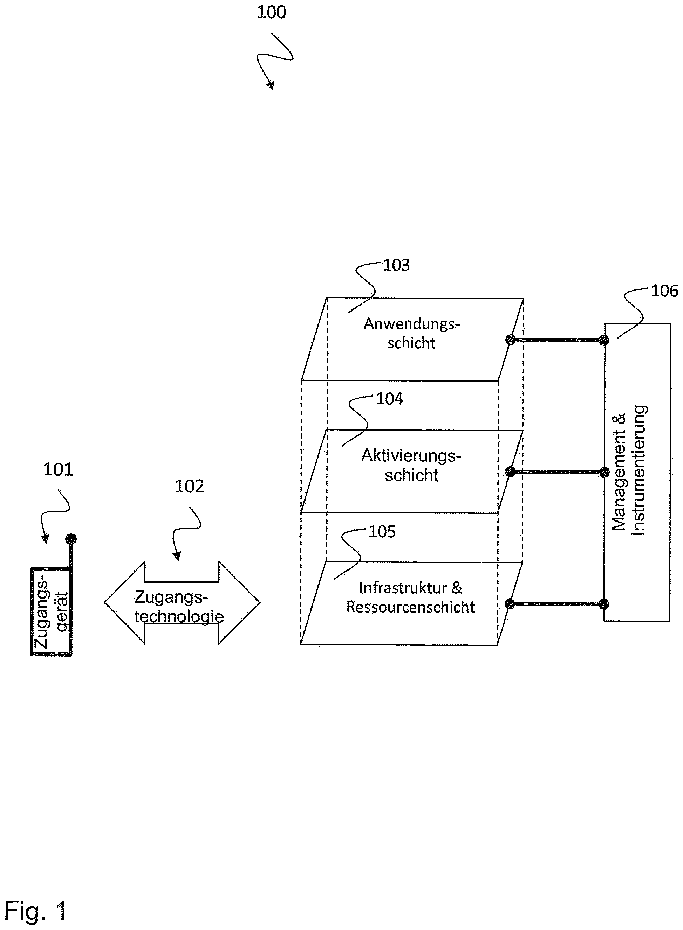

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G-Systemarchitektur. Figur 1 zeigt eine schematische Darstellung einer solchen 5G-Systemarchitektur 100. Die 5G-Systemarchitektur 100 umfasst einen Bereich mit 5G-Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs- und Speicherknoten), 5G-Geräten wie z.B. Mobiltelefonen, tragbaren Geräten, Maschinenkommunikationsmodulen und dergleichen. 5G-Geräte können vielfältige und konfigurierbare Fähigkeiten aufweisen und beispielsweise als Relay oder Hub agieren oder abhängig von dem jeweiligen Kontext als Computer/Speicher-Ressource arbeiten. Diese Ressourcen werden den höheren Schichten 104, 103 und der Management- & Instrumentierungsebene 106 über entsprechende APIs (Anwendungsprogrammier-Schnittstellen) zur Verfügung gestellt. Das Überwachen der Leistungsfähigkeit und der Konfigurationen können inhärenter Teil solcher APIs sein.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, sowie einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden, und zwar durch Nutzung der dafür vorgesehenen APIs. Für bestimmte Funktionen können mehrfache Varianten existieren, z.B. verschiedene Implementierungen derselben Funktionalität, welche unterschiedliche Leistungsfähigkeiten oder Charakteristiken haben. Die verschiedenen Grade der Leistungsfähigkeit und der angebotenen Fähigkeiten können dazu verwendet werden, um die Netzwerkfunktionalitäten wesentlich weiter zu unterscheiden, als es in heutigen Netzen möglich ist, beispielsweise als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, von Unternehmen, vertikalen Operatoren oder von Drittparteien, die das 5G-Netzwerk nutzen. Die Schnittstelle zu der Management- & Instrumentierungsebene 106 erlaubt zum Beispiel, bestimmte, d.h. dedizierte Netzwerk-Slices für eine Anwendung aufzubauen, oder eine Anwendung einer existierenden Netzwerk-Slice zuzuweisen.

Die Management- & Instrumentierungsebene 106 ist der Kontaktpunkt, um die geforderten Anwendungsfälle in tatsächliche Netzwerkfunktionen und Slices umzusetzen. Sie definiert die Netzwerk-Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet ferner sowohl die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk-Slices zu erzeugen und zu verwalten. Aufgrund der vielzähligen Aufgaben der Management- & Instrumentierungsebene 106 handelt es sich dabei in der Regel nicht um einen monolithischen Block von Funktionalität, sondern vielmehr um eine Sammlung modularer Funktionen, die Fortschritte integrieren, die in verschiedenen Netzwerkdomänen erzielt werden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und Dienstbereitstellung zu optimieren.

Die hier vorgestellten Geräte, Systeme und Verfahren sind dazu vorgesehen, die Kommunikation in Kommunikationsnetzen zu verbessern, insbesondere in 5G-Kommunikationsnetzen mit mehreren Netzwerk-Slices, wie im Folgenden beschrieben.

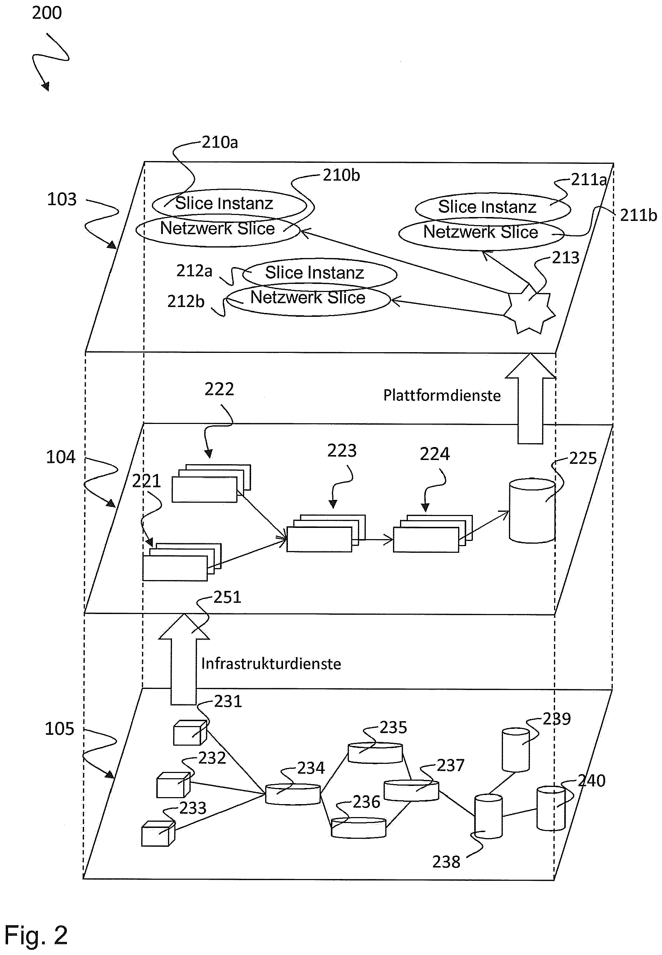

Figur 2 zeigt eine schematische Darstellung eines 5G-Kommunikationsnetzwerks 200 mit mehreren Netzwerk-Slices. Das 5G-Kommunikationsnetzwerk 200 umfasst eine Infrastruktur- & Ressourcenschicht 105, eine Aktivierungsschicht 104 und eine Anwendungsschicht 103.

Die Infrastruktur- & Ressourcenschicht 105 umfasst die gesamte physikalische Infrastruktur, die einem Netzwerkbetreiber zugeordnet ist, d.h. Standorte, Kabel, Netzwerkknoten und dergleichen. Diese Schicht 105 bildet die Grundlage für alle Netzwerk-Slices. Sie ist so generisch wie möglich aufgebaut, um die Zahl der spezialisierten physikalischen Einheiten auf ein Mindestmaß zu beschränken. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von (z.B. nicht-physikalischen) Softwareobjekten hinzu, um das Erzeugen von jeder Art von Netzwerk-Slices zu ermöglichen und so eine Plattform als Dienst der nächsthöheren Schicht 103 bereitzustellen.

Softwareobjekte können in jeder Granularität vorliegen, und ein winziges oder ein sehr großes Fragment einer Netzwerk-Slice umfassen. Um die Erzeugung von Netzwerk-Slices auf einem geeigneten Abstraktionslevel zu erlauben, können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekte 224 überführt werden können und in einer Objektbibliothek 225 der nächsthöheren Ebene zur Verfügung gestellt werden. Damit kann die Komplexität hinter den Netzwerk-Slices verborgen werden. Beispielsweise kann ein Nutzer bzw. Kunde eine mobile Breitband-Slice erzeugen und dabei lediglich KPIs (Key Performance Indikatoren) definieren, ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einer Netzwerk-Slice unterstützt, z.B. durch Verwendung von SFC ("Service Function Chaining" = Dienstfunktionenverkettung) oder modifizierender Software, so dass die Funktionalität einer Slice vollständig vordefiniert werden kann und sowohl näherungsweise statische Softwaremodule als auch dynamisch hinzufügbare Softwaremodule umfassen kann.

Eine Netzwerk-Slice kann dabei als software-definierte Entität betrachtet werden, die auf einem Satz von Objekten basiert, welche ein vollständiges Netzwerk definieren. Die Aktivierungsschicht 104 spielt für dieses Konzept eine Schlüsselrolle, da sie alle Softwareobjekte umfassen kann, die notwendig sind, um die Netzwerk-Slice und die entsprechenden Fertigkeiten zum Handhaben der Objekte bereitzustellen. Die Aktivierungsschicht 104 kann als eine Art von Netzwerk-Betriebssystem betrachtet werden, komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk-Slices auszugestalten, während der Plattform-Betreiber immer noch die physikalischen Knoten instand halten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln einer Netzwerk-Slice-Umgebung.

Eine Netzwerk-Slice, auch als 5G-Slice bezeichnet, unterstützt die Kommunikationsdienste eines bestimmten Verbindungstyps mit einer bestimmten Art der Handhabung der C- (Control bzw. Steuerungs-) und U-(User Data bzw. Nutzerdaten) Schicht, auch als "Control Plane" und "User Plane" bezeichnet. Eine 5G-Slice setzt sich zusammen aus einer Sammlung von verschiedenen 5G-Netzwerkfunktionen und spezifischen Funkzugangstechnologie-Einstellungen (RAT = radio access technology), die für den spezifischen Anwendungsfall miteinander kombiniert werden. Daher kann eine 5G-Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie sowie eine Konfiguration der 5G-Geräte. Nicht alle Slices enthalten dieselben Funktionen, einige Funktionen, die heute für ein mobiles Netzwerk als wesentlich erscheinen, können sogar in einigen Slices nicht vorkommen. Die Intention einer 5G-Slice ist es, nur die Funktionen bereitzustellen, die für den spezifischen Anwendungsfall notwendig sind, und alle anderen unnötigen Funktionalitäten zu vermeiden. Die Flexibilität hinter dem Slice-Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte von Slices über geeignete APIs zu steuern, um so maßgeschneiderte Dienste bereitstellen zu können.

Die Anwendungsschicht 103 umfasst alle erzeugten Netzwerk-Slices 210b, 211b, 212b und bietet diese als "Netzwerk als Service" verschiedenen Netzwerknutzern, z.B. verschiedenen Kunden an. Das Konzept erlaubt die Wiederbenutzung von definierten Netzwerk-Slices 210b, 211b, 212b für verschiedene Anwender, beispielsweise als eine neue Netzwerk-Slice-Instanz 210a, 211a, 212a. Beispielsweise kann eine Netzwerk-Slice 210b, 211b, 212b, welche beispielsweise einer Automotive-Anwendung zugeordnet ist, auch für verschiedene andere industrielle Anwendungen genutzt werden. Die Slice-Instanzen 210a, 211a, 212a, die von einem ersten Anwender erzeugt wurden, können beispielsweise unabhängig von den Slice-Instanzen sein, die von einem zweiten Anwender erzeugt wurden, und das obwohl die gesamte Netzwerk-Slice-Funktionalität dieselbe sein kann.

Die Erfindung basiert im Wesentlichen auf der Erkenntnis, dass ein mobiles Kommunikationsgerät die Position nur dann wechseln kann, wenn das mobile Kommunikationsgerät bewegt wird oder sich bewegt.

Vor diesem Hintergrund betrifft die Erfindung gemäß einem ersten Aspekt ein mobiles Kommunikationsgerät mit einer Erfassungseinrichtung zur Erfassung einer Bewegung des mobilen Kommunikationsgerätes, wobei die Erfassungseinrichtung ausgebildet ist, bei erfasster Bewegung des mobilen Kommunikationsgerätes ein Bewegungssignal auszugeben, und einer Kommunikationsschnittstelle, welche ausgebildet ist, ansprechend auf einen Empfang des Bewegungssignals ein Lokalisierungsupdate über ein Kommunikationsnetzwerk zu einer Mobilitätsmanagemententität des Kommunikationsnetzwerkes auszusenden, wobei das Lokalisierungsupdate eine Positionsinformation des mobilen Kommunikationsgerätes anzeigt. Bei der Positionsinformation des mobilen Kommunikationsgeräts kann es sich um eine absolute Position, eine relative Positionsänderung oder nur einfach um die Information handeln, dass sich das mobile Kommunikationsgerät bewegt hat.

Bei der Mobilitätsmanagemententität kann es sich um eine Mobilitätsmanagemententität (MME) gemäß dem 4G-Standard oder die entsprechende Netzwerkkomponente gemäß dem 5G-Standard handeln, welche die Mobilitätsfunktion ausführt und für die Überwachung der aktuellen Position des mobilen Kommunikationsgeräts zuständig ist.

Erfindungsgemäß wird das Lokalisierungsupdate nur bei erfasster Bewegung ausgesendet. Die Mobilitätsmanagemententität kann bis zum Empfang des Lokalisierungsupdates davon ausgehen, dass das mobile Kommunikationsgerät seine bisherige Position und damit auch die Funkzelle(n) nicht verlassen hat und sich am bekannten Ort befindet. Das mobile Kommunikationsgerät gibt dem Netz somit bekannt, wann es wieder erreichbar für terminierende Kommunikation ist (falls es dies überhaupt will/kann) bzw. dass es sich nun in einen Modus schaltet, indem es sich nur dann dem Netz gegenüber melden wird, wenn es sich einem Schwellwert weit bewegt hat (3 dimensional). Das Zugangsnetz kann eine verteilte Datenbank enthalten, die dem Kernnetz als eine einzige logische Datenbank erscheint. Dadurch kann einerseits das Zugangsnetz die genaue Position des mobilen Kommunikationsgeräts halten, andererseits muss das Kernnetz beim Paging keinen bestimmten Bereich angeben, in dem das mobile Kommunikationsgerät gesucht werden soll, sondern einfach nur an das Zugangsnetz eine einfache Anfrage senden. Dadurch kann sowohl das Zugangsnetz als auch das Kernnetz, solange keine aktive Änderung des mobilen Kommunikationsgeräts signalisiert wird, davon ausgehen, dass sich das mobile Kommunikationsgerät nicht von der Stelle gerührt hat. Der Schwellert ist dafür da, etwaige Fehler durch Vibrationen zu vermeiden. Dadurch kann das Paging zumindest stark reduziert werden. Mit anderen Worten: erfindungsgemäß ist das Aussenden des Lokalisierungsupdate Ereignisgetriggert, nämlich bei erfasster Bewegung des mobilen Kommunikationsgeräts. Ebenso muss das mobile Kommunikationsgerät nicht dauernd auf Pagings der Mobilitätsmanagemententität antworten, wodurch der Energieverbrauch auch des mobilen Kommunikationsgeräts sinkt.

Die Erfindung kann beispielsweise im Kontext von Internet of Things die einsetzbaren Protokolle deutlich vereinfachen. Hier kann komplett auf das Lokalisierungs-Paging durch die Mobilitätsmanagemententität verzichtet werden, z.B. wenn das mobile Kommunikationsgerät dem Netz mitgeteilt hat, dass es nun in den Modus "nur originating traffic" schaltet.

Somit wird ein energieeffizienteres Konzept zur Lokalisierung eines mobilen Kommunikationsgeräts in einem Kommunikationsnetzwerk geschaffen.

In einer Ausführungsform umfasst die Erfassungseinrichtung einen Bewegungssensor, Beschleunigungssensor, Gyrosensor und dergleichen und/oder eine Einrichtung, insbesondere eine GPS-Einrichtung, zur Bestimmung einer tatsächlichen Bewegung und/oder der aktuellen Position des mobilen Kommunikationsgeräts auf der Grundlage eines globalen Navigationssatellitensystems inklusive D-GPS.

In einer Ausführungsform ist die Erfassungseinrichtung ausgebildet, das Bewegungssignal auszugeben, wenn eine tatsächliche Bewegung, die einen Schwellwert überschreitet,) ausgeführt wird oder/und die erfasste Bewegung zu einem relativen oder absoluten Abstand des mobilen Kommunikationsgeräts von einer Referenzposition führt, der größer als ein erster Schwellenwert ist.

In einer Ausführungsform entspricht die Referenzposition der Position des mobilen Kommunikationsgeräts, in welcher die Kommunikationsschnittstelle ein vorheriges, insbesondere das letzte Lokalisierungsupdate zu der Mobilitätsmanagemententität des Kommunikationsnetzwerkes ausgesendet hat.

In einer Ausführungsform ist das mobile Kommunikationsgerät Teil einer Netzwerk-Slice, d.h. eines logischen Subnetzwerkes des Kommunikationsnetzwerks und die Mobilitätsmanagemententität ist in Form einer Netzwerkfunktion der Netzwerk-Slice implementiert.

In einer Ausführungsform ist die Netzwerk-Slice des Kommunikationsnetzwerks von einem SDN-Orchestrator ausgebildet.

Gemäß einem zweiten Aspekt betrifft die Erfindung ein Verfahren zum Betreiben eines mobilen Kommunikationsgeräts mit: Erfassen einer Bewegung des mobilen Kommunikationsgerätes; Ausgeben eines Bewegungssignals bei erfasster Bewegung des mobilen Kommunikationsgerätes; ansprechend auf einen Empfang des Bewegungssignals, Aussenden eines Lokalisierungsupdates über ein Kommunikationsnetzwerk zu einer Mobilitätsmanagemententität des Kommunikationsnetzwerkes, wobei das Lokalisierungsupdate eine Positionsinformation des mobilen Kommunikationsgerätes anzeigt. Bei der Positionsinformation des mobilen Kommunikationsgeräts kann es sich um eine absolute Position, eine relative Positionsänderung oder nur einfach um die Information handeln, dass sich das mobile Kommunikationsgerät bewegt hat.

Bei der Mobilitätsmanagemententität kann es sich um eine Mobilitätsmanagemententität (MME) gemäß dem 4G-Standard oder die entsprechende Netzwerkkomponente gemäß dem 5G-Standard handeln, welche die Mobilitätsfunktion ausführt und für die Überwachung der aktuellen Position des mobilen Kommunikationsgeräts zuständig ist.

In einer Ausführungsform wird die Bewegung des mobilen Kommunikationsgerätes mit einem Bewegungssensor, Beschleunigungssensor, Gyrosensor und dergleichen und/oder mit einer Einrichtung, insbesondere einer GPS-Einrichtung, zur Bestimmung einer tatsächlichen Bewegung und/oder der aktuellen Position des mobilen Kommunikationsgeräts auf der Grundlage eines globalen Navigationssatellitensystems, insbesondere D-GPS, erfasst.

In einer Ausführungsform wird das Bewegungssignal dann ausgegeben, wenn eine tatsächliche Bewegung, die einen Schwellwert überschreitet, ausgeführt wird und/oder die erfasste Bewegung zu einem relative oder absoluten Abstand des mobilen Kommunikationsgeräts von einer Referenzposition führt, der größer als ein erster Schwellenwert ist.

In einer Ausführungsform ist die Referenzposition die Position des mobilen Kommunikationsgeräts, in welcher ein vorheriges Lokalisierungsupdate zu der Mobilitätsmanagemententität des Kommunikationsnetzwerkes ausgesendet worden ist.

In einer Ausführungsform ist das mobile Kommunikationsgerät Teil einer Netzwerk-Slice, d.h. eines logischen Subnetzwerks des Kommunikationsnetzwerks und die Mobilitätsmanagemententität ist als Netzwerkfunktion der Netzwerk-Slice implementiert ist.

In einer Ausführungsform wird die Netzwerk-Slice des Kommunikationsnetzwerks von einem SDN-Orchestrator ausgebildet.

In einer Ausführungsform ist die Mobilitätsmanagemententität als Mobilitätsmanagemententität (MME) gemäß dem 4G Mobilfunkstandard ausgebildet.

Gemäß einem dritten Aspekt betrifft die Erfindung ein Computerprogrammprodukt mit Computerprogrammcode zur Durchführung des Verfahrens gemäß dem zweiten Aspekt der Erfindung.

Weitere Ausführungsbeispiele werden Bezug nehmend auf die beiliegenden Zeichnungen erläutert. Es zeigen:
- Fig. 1: eine schematische Darstellung der Architektur eines 5G-Kommunikationsnetzwerkes;
- Fig. 2: eine schematische Darstellung eines 5G-Kommunikationsnetzwerks mit mehreren Netzwerk-Slices;
- Fig. 3a: eine schematische Darstellung eines Kommunikationssystems mit einem mobilen Kommunikationsgerät gemäß einer Ausführungsform;
- Fig. 3b: eine schematische Darstellung eines Kommunikationssystems mit einem mobilen Kommunikationsgerät gemäß einer weiteren Ausführungsform; und
- Fig. 4: eine schematische Darstellung eines Verfahrens zum Betreiben eines mobilen Kommunikationsgeräts gemäß einer Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Es werden Vorrichtungen bzw. Geräte beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Merkmale verzichtet.

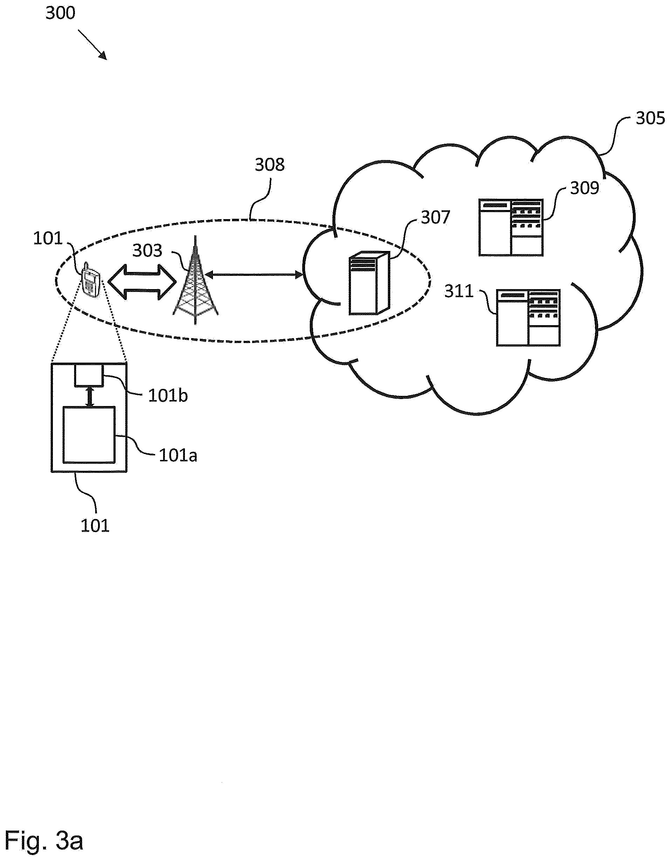

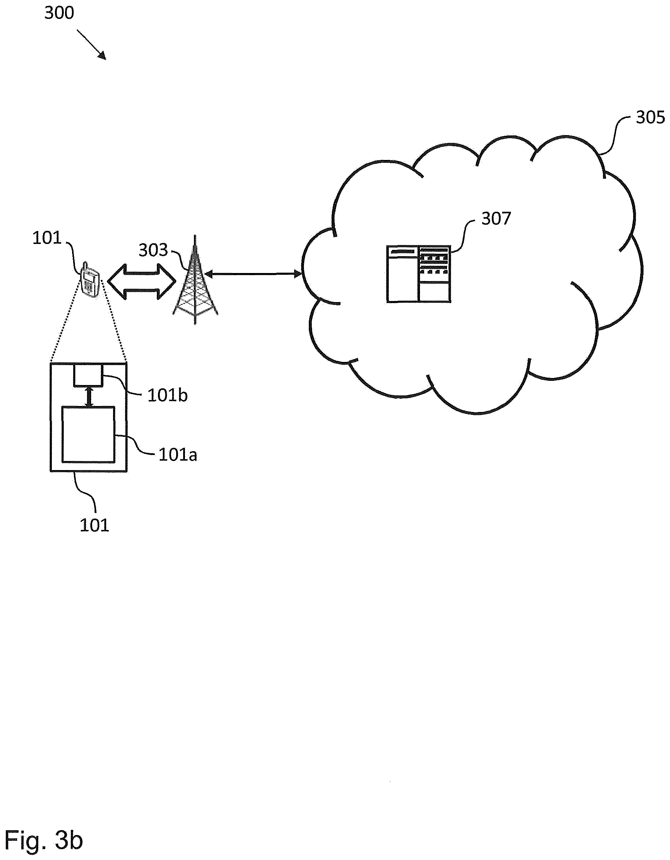

Figur 3a zeigt eine schematische Darstellung eines Kommunikationssystems 300 mit einem mobilen Kommunikationsgerät 101 gemäß einer Ausführungsform. Das mobile Kommunikationsgerät 101, bei dem es sich beispielsweise um ein Mobiltelefon handeln kann, ist ausgebildet, über ein Kommunikationsnetzwerk 305 zu kommunizieren. Das Kommunikationsnetzwerk 305 kann gemäß einem oder mehreren Mobilfunkstandards ausgebildet sein. Bei der in Figur 3a dargestellten Ausführungsform handelt es sich bei dem Kommunikationsnetzwerk 305 um ein Mobilfunkkommunikationsnetzwerk 305 gemäß dem 5G-Standard. Bei der nachstehend im Zusammenhang mit Figur 3b beschriebenen Ausführungsform handelt es sich dem Kommunikationsnetzwerk 305 um ein Mobilfunkkommunikationsnetzwerk 305 gemäß dem 4G-Standard.

Wie sich der Detaildarstellung in Figur 3a entnehmen lässt, umfasst das mobile Kommunikationsgerät 101 eine Erfassungseinrichtung 101a und eine Kommunikationsschnittstelle 101b. Ferner können das mobile Kommunikationsgerät 101, die Erfassungseinrichtung 101a und/oder die Kommunikationsschnittstelle 101b einen Prozessor umfassen. Die Kommunikationsschnittstelle 101b kann beispielsweise eine Antenne umfassen, um über eine Funkschnittstelle mit einer Basisstation 303 zu kommunizieren, die Teil des Kommunikationsnetzwerks 305 ist oder mit diesem in Verbindung steht.

Die Erfassungseinrichtung 101a zur Erfassung einer Bewegung des mobilen Kommunikationsgerätes 101 ist ausgebildet, bei erfasster Bewegung des mobilen Kommunikationsgerätes 101 ein Bewegungssignal an die Kommunikationsschnittstelle 101b auszugeben. Die Kommunikationsschnittstelle 101b ist ausgebildet, ansprechend auf einen Empfang des Bewegungssignals ein Lokalisierungsupdate über das Kommunikationsnetzwerk 305 zu einer Mobilitätsmanagemententität 307 des Kommunikationsnetzwerkes 305 auszusenden, wobei das Lokalisierungsupdate eine Positionsinformation des mobilen Kommunikationsgerätes 101 anzeigt. Bei der Positionsinformation des mobilen Kommunikationsgeräts 101 kann es sich um eine absolute Position, eine relative Positionsänderung oder nur einfach um die Information handeln, dass sich das mobile Kommunikationsgerät 101 bewegt hat.

In einer Ausführungsform umfasst die Erfassungseinrichtung 101a einen Bewegungssensor, Beschleunigungssensor, Gyrosensor und dergleichen und/oder eine Einrichtung, insbesondere eine GPS-Einrichtung, zur Bestimmung einer tatsächlichen Bewegung und/oder der aktuellen Position des mobilen Kommunikationsgeräts 101 auf der Grundlage eines globalen Navigationssatellitensystems umfasst, insbesondere D-GPS.

In einer Ausführungsform ist die Erfassungseinrichtung 101a ausgebildet, das Bewegungssignal auszugeben, wenn eine tatsächliche Bewegung, die einen Schwellwert überschreitet, ausgeführt wird und/oder die erfasste Bewegung des mobilen Kommunikationsgeräts 101 zu einem relativen oder absoluten Abstand des mobilen Kommunikationsgeräts 101 von einer Referenzposition führt, der größer als ein erster Schwellenwert ist. Der erste Schwellenwert kann beispielsweise im Bereich von Zentimetern oder Metern liegen.

In einer Ausführungsform entspricht die Referenzposition der Position des mobilen Kommunikationsgeräts 101, in welcher sich das mobile Kommunikationsgerät 101 befunden hat, als die Kommunikationsschnittstelle 101b ein vorheriges, insbesondere das letzte Lokalisierungsupdate zu der Mobilitätsmanagemententität 307 des Kommunikationsnetzwerkes 305 ausgesendet hat.

Bei der in Figur 3a dargestellten Ausführungsform ist das mobile Kommunikationsgerät 101 Teil einer Netzwerk-Slice 308, d.h. eines logischen Subnetzwerks des Kommunikationsnetzwerks 305, wobei die Mobilitätsmanagemententität 307 als Netzwerkfunktion der Netzwerk-Slice 308 implementiert ist, beispielsweise auf einem Server 307 des Kommunikationsnetzwerks 305.

Wie bereits vorstehend beschrieben, bezeichnet der Begriff "Netzwerk-Slice" bzw. "Netzwerk-Slicing" ein Konzept zum Betreiben mehrerer logische Netzwerke als virtuell unabhängige, d.h. logisch entkoppelte, Einheiten auf einer gemeinsamen physikalischen Netzwerk-Infrastruktur. In diesem Sinne stellt eine Netzwerk-Slice ein unabhängiges virtuelles Ende-zu-Ende-Netzwerk dar, das sich aus Anwendersicht auf dieselbe Art und Weise verhält wie ein physikalisches Netzwerk, einschließlich einer Business-Logik und Netzwerkmanagementfähigkeiten. Für weitere Details zu Netzwerk-Slices im Sinne der vorlegenden Erfindung wird auf "NGMN 5G White Paper" und insbesondere auf den Abschnitt 5.4 davon verwiesen, das auf der Webseite der "NGMN Alliance" unter der URL "https://www.ngmn.org/home.html" abgerufen werden kann und auf das hiermit vollumfänglich Bezug genommen wird.

In einer Ausführungsform wird die Netzwerk-Slice 308 des Kommunikationsnetzwerks 305 von einem SDN-Orchestrator 309 ausgebildet, wobei die Abkürzung SDN für "Software Defined Networking" steht. Ferner kann ein SDN-Controller 311 vorgesehen sein, der für die in der Netzwerk-Slice 308 notwendigen Vernetzung dient, insbesondere zum Weiterleiten von Datenpaketen in der Netzwerk-Slice 308 auf der Basis von Switches, die vom SDN-Controller 311 gesteuert werden.

Figur 3b zeigt eine schematische Darstellung einer weiteren Ausführungsform des Kommunikationssystems 300 mit dem mobilen Kommunikationsgerät 101. Bei der in Figur 3b gezeigten Ausführungsform ist die Mobilitätsmanagemententität 307 als Mobilitätsmanagemententität (MME) gemäß dem 4G Mobilfunkstandard ausgebildet, also als dedizierte hardware-Einheit und nicht wie in der in Figur 3a dargestellten Ausführungsform als logische Funktion der Netzwerk-Slice 308.

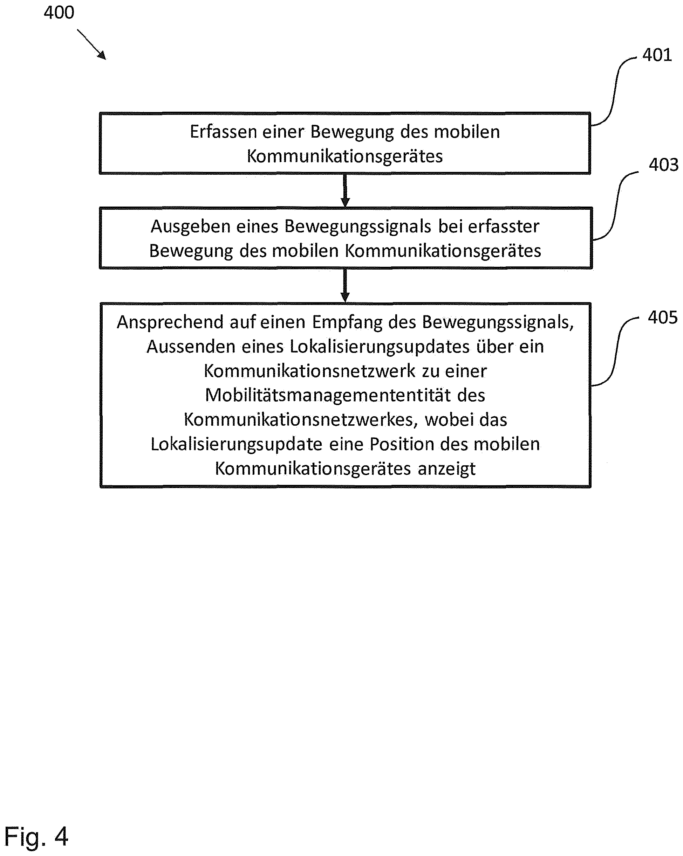

Figur 4 zeigt ein den Figuren 3a und 3b entsprechendes Verfahren 400 zum Betreiben des mobilen Kommunikationsgeräts 101. Das Verfahren 400 umfasst einen Schritt 401 des Erfassens einer Bewegung des mobilen Kommunikationsgerätes 101; einen Schritt 403 des Ausgebens eines Bewegungssignals bei erfasster Bewegung des mobilen Kommunikationsgerätes 101 und, ansprechend auf einen Empfang des Bewegungssignals, einen Schritt des Aussendens eines Lokalisierungsupdates über das Kommunikationsnetzwerk zu der Mobilitätsmanagemententität des Kommunikationsnetzwerkes, wobei das Lokalisierungsupdate eine Positionsinformation des mobilen Kommunikationsgerätes 101 anzeigt. Bei der Positionsinformation des mobilen Kommunikationsgeräts 101 kann es sich um eine absolute Position, eine relative Positionsänderung oder nur einfach um die Information handeln, dass sich das mobile Kommunikationsgerät 101 bewegt hat.

## Patentansprüche

1. Kommunikationssystem (300), mit:
einem Kommunikationsnetzwerk (305) mit einer Netzwerk-Slice (308) und einer Mobilitätsmanagemententität (307), wobei die Mobilitätsmanagemententität (307) als Netzwerkfunktion der Netzwerk-Slice (308) implementiert ist; und
einem mobilen Kommunikationsgerät (101), welches Teil der Netzwerk-Slice (308) des Kommunikationsnetzwerks (305) ist, mit:
einer Erfassungseinrichtung (101a) zur Erfassung einer Bewegung des mobilen Kommunikationsgerätes (101), wobei die Erfassungseinrichtung (101a) ausgebildet ist, bei erfasster Bewegung des mobilen Kommunikationsgerätes (101) ein Bewegungssignal auszugeben; und
einer Kommunikationsschnittstelle (101b), welche ausgebildet ist, ansprechend auf einen Empfang des Bewegungssignals ein Lokalisierungsupdate über das Kommunikationsnetzwerk (305) zu der Mobilitätsmanagemententität (307) des Kommunikationsnetzwerkes (305) auszusenden, wobei das Lokalisierungsupdate eine Positionsinformation des mobilen Kommunikationsgerätes (101) anzeigt;
wobei die Erfassungseinrichtung (101a) ferner ausgebildet ist, das Bewegungssignal auszugeben, wenn die erfasste Bewegung zu einem relativen Abstand des mobilen Kommunikationsgeräts (101) von einer Referenzposition führt, der größer als ein erster Schwellenwert ist, wobei die Referenzposition die Position des mobilen Kommunikationsgeräts (101) ist, in welcher die Kommunikationsschnittstelle (101b) ein vorheriges Lokalisierungsupdate zu der Mobilitätsmanagemententität (307) des Kommunikationsnetzwerkes (305) ausgesendet hat.

2. Kommunikationssystem (300) nach Anspruch 1, wobei die Erfassungseinrichtung (101a) einen Bewegungssensor, Beschleunigungssensor, Gyrosensor und/oder eine Einrichtung, insbesondere eine GPS-Einrichtung, zur Bestimmung einer tatsächlichen Bewegung und/oder der Position des mobilen Kommunikationsgeräts (101) auf der Grundlage eines globalen Navigationssatellitensystems umfasst.

3. Kommunikationssystem (300) nach einem der vorstehenden Ansprüche, wobei die Netzwerk-Slice (308) des Kommunikationsnetzwerks (305) von einem SDN-Orchestrator (309) ausgebildet ist.

4. Verfahren (400) zum Betreiben eines mobilen Kommunikationsgeräts (101), welches Teil einer Netzwerk-Slice (308) eines Kommunikationsnetzwerks (305) ist, mit:
Erfassen (401) einer Bewegung des mobilen Kommunikationsgerätes (101);
Ausgeben (403) eines Bewegungssignals bei erfasster Bewegung des mobilen Kommunikationsgerätes (101), wobei das Bewegungssignal dann ausgegeben wird, wenn die erfasste Bewegung zu einem relativen Abstand des mobilen Kommunikationsgeräts (101) von einer Referenzposition führt, der größer als ein erster Schwellenwert ist, wobei die Referenzposition die Position des mobilen Kommunikationsgeräts (101) ist, in welcher ein vorheriges Lokalisierungsupdate zu der Mobilitätsmanagemententität (307) des Kommunikationsnetzwerkes (305) ausgesendet worden ist; und
ansprechend auf einen Empfang des Bewegungssignals, Aussenden (405) eines Lokalisierungsupdates über das Kommunikationsnetzwerk (305) zu einer Mobilitätsmanagemententität (307) des Kommunikationsnetzwerkes (305), wobei das Lokalisierungsupdate eine Positionsinformation des mobilen Kommunikationsgerätes (101) anzeigt, und wobei die Mobilitätsmanagemententität (307) als Netzwerkfunktion der Netzwerk-Slice (308) implementiert ist.

5. Verfahren (400) nach Anspruch 4, wobei die Bewegung des mobilen Kommunikationsgerätes (101) mit einem Bewegungssensor, Beschleunigungssensor, Gyrossensor und/oder mit einer Einrichtung, insbesondere einer GPS-Einrichtung, zur Bestimmung einer tatsächlichen Bewegung und/oder der Position des mobilen Kommunikationsgeräts (101) auf der Grundlage eines globalen Navigationssatellitensystems erfasst wird.

6. Verfahren (400) nach einem der Ansprüche 4 oder 5, wobei die Netzwerk-Slice (308) des Kommunikationsnetzwerks (305) von einem SDN-Orchestrator (309) ausgebildet wird.

7. Computerprogrammprodukt mit Computerprogrammcode zur Durchführung des Verfahrens (400) nach einem der Ansprüche 4 bis 6 auf einem Prozessor.

## Claims

1. Communication system (300), having:
a communication network (305) having a network slice (308) and a mobility management entity (307), wherein the mobility management entity (307) is implemented as a network function of the network slice (308); and
a mobile communication device (101), which is part of the network slice (308) of the communication network (305), having:
a sensing device (101a) for sensing a movement of the mobile communication device (101), wherein the sensing device (101a) is configured to output a movement signal when movement of the mobile communication device (101) is sensed; and
a communication interface (101b), configured to, in response to a reception of the movement signal, transmit a localization update via the communication network (305) to the mobility management entity (307) of the communication network (305), wherein the localization update indicates information about the position of the mobile communication device (101);
wherein the sensing device (101a) is further configured to output the movement signal when the sensed movement leads to a relative distance between the mobile communication device (101) and a reference position that is greater than a first threshold value, wherein the reference position is the position of the mobile communication device (101) at which the communication interface (101b) has transmitted a previous localization update to the mobility management entity (307) of the communication network (305).

2. Communication system (300) according to Claim 1, wherein the sensing device (101a) comprises a motion sensor, acceleration sensor, gyrosensor and/or a device, in particular a GPS device, for determining an actual movement and/or the position of the mobile communication device (101) on the basis of a global navigation satellite system.

3. Communication system (300) according to either of the preceding claims, wherein the network slice (308) of the communication network (305) is provided by an SDN orchestrator (309).

4. Method (400) for operating a mobile communication device (101) that is part of a network slice (308) of a communication network (305), comprising:
sensing (401) a movement of the mobile communication device (101);
outputting (403) a movement signal when movement of the mobile communication device (101) is sensed, wherein the movement signal is output when the sensed movement leads to a relative distance between the mobile communication device (101) and a reference position that is greater than a first threshold value, wherein the reference position is the position of the mobile communication device (101) at which a previous localization update has been transmitted to the mobility management entity (307) of the communication network (305); and
in response to a reception of the movement signal, transmitting (405) a localization update via the communication network (305) to a mobility management entity (307) of the communication network (305), wherein the localization update indicates information about the position of the mobile communication device (101), and wherein the mobility management entity (307) is implemented as a network function of the network slice (308) .

5. Method (400) according to Claim 4, wherein the movement of the mobile communication device (101) is sensed using a motion sensor, acceleration sensor, gyrosensor and/or using a device, in particular a GPS device, for determining an actual movement and/or the position of the mobile communication device (101) on the basis of a global navigation satellite system.

6. Method (400) according to either of Claims 4 and 5, wherein the network slice (308) of the communication network (305) is provided by an SDN orchestrator (309).

7. Computer program product having computer program code for performing the method (400) according to one of Claims 4 to 6 on a processor.

## Revendications

1. Système de communication (300), comportant :
un réseau de communications (305) comportant une tranche de réseau (308) et une entité de gestion de mobilité (307), dans lequel l'entité de gestion de mobilité (307) est mise en oeuvre sous la forme d'une fonction de réseau de la tranche de réseau (308) ; et
un appareil de communication mobile (101) faisant partie de la tranche de réseau (308) du réseau de communication (305), comportant ;
un dispositif de détection (101a) destiné à détecter un mouvement de l'appareil de communication mobile (101), dans lequel le dispositif de détection (101a) est conçu pour délivrer un signal de mouvement lors d'un mouvement détecté de l'appareil de communication mobile (101) ; et
une interface de communication (101b) conçue pour transmettre une mise à jour de position par l'intermédiaire du réseau de communication (305) à l'entité de gestion de mobilité (307) du réseau de communication (305), en réponse à la réception du signal de mouvement, dans lequel la mise à jour de position indique une information de position de l'appareil de communication mobile (101) ;
dans lequel le dispositif de détection (101a) est en outre conçu pour délivrer le signal de mouvement lorsque le mouvement détecté conduit au fait que la distance relative de l'appareil de communication mobile (101) par rapport à une position de référence est supérieure à une première valeur de seuil, dans lequel la position de référence est la position de l'appareil de communication mobile (101) à laquelle l'interface de communication (101b) a transmis une mise à jour de position précédente à l'entité de gestion de mobilité (307) du réseau de communication (305).

2. Système de communication (300) selon la revendication 1, dans lequel le dispositif de détection (101a) comprend un capteur de mouvement, un capteur d'accélération, un capteur gyroscopique et/ou un dispositif, en particulier un dispositif GPS, destiné à déterminer un mouvement réel et/ou la position de l'appareil de communication mobile (101) sur la base d'un système mondial de navigation par satellite.

3. Système de communication (300) selon l'une des revendications précédentes, dans lequel la tranche de réseau (308) du réseau de communication (305) est formée par un orchestrateur SDN (309).

4. Procédé (400) pour faire fonctionner un appareil de communication mobile (101) faisant partie d'une tranche de réseau (308) d'un réseau de communication (305), consistant à :
détecter (401) un mouvement de l'appareil de communication mobile (101) ;
délivrer (403) un signal de mouvement lors d'un mouvement détecté de l'appareil de communication mobile (101), dans lequel le signal de mouvement est délivré lorsque le mouvement détecté conduit au fait que la distance relative de l'appareil de communication mobile (101) par rapport à une position de référence est supérieure à une première valeur de seuil, dans lequel la position de référence est la position de l'appareil de communication mobile (101) à laquelle une mise à jour de position précédente a été transmise à l'entité de gestion de mobilité (307) du réseau de communication (305) ; et
en réponse à la réception du signal de mouvement, transmettre (405) une mise à jour de position par l'intermédiaire du réseau de communication (305) à une entité de gestion de mobilité (307) du réseau de communication (305), dans lequel la mise à jour de localisation indique une information de position de l'appareil de communication mobile (101), et dans lequel l'entité de gestion de mobilité (307) est mise en oeuvre sous la forme d'une fonction de réseau de la tranche de réseau (308).

5. Procédé (400) selon la revendication 4, dans lequel le mouvement de l'appareil de communication mobile (101) est détecté par un capteur de mouvement, un capteur d'accélération, un capteur gyroscopique et/ou un dispositif, en particulier un dispositif GPS, destiné à déterminer un mouvement réel et/ou la position de l'appareil de communication mobile (101) sur la base d'un système mondial de navigation par satellite.

6. Procédé (400) selon l'une des revendications 4 ou 5, dans lequel la tranche de réseau (308) du réseau de communication (305) est formée par un orchestrateur SDN (309).

7. Produit de programme d'ordinateur comportant un code de programme d'ordinateur destiné à mettre en oeuvre le procédé (400) selon l'une des revendications 4 à 6 sur un processeur.
